# EUROPEAN PATENT SPECIFICATION

(11) **EP 1 453 181 B1**
(45) Date of publication and mention of the grant of the patent: **09.05.2007**
(21) Application number: 04250875.4
(22) Date of filing: 18.02.2004
(51) Int. Cl.: H02K 5/04, H02K 5/24, F16F 15/08

(54) **Supporting structure for blower motor**
Haltevorrichtung für einen Lüftermotor
Structure de support d'un moteur à ventilateur

(30) Priority: 28.02.2003 JP 2003053054
(43) Date of publication of application: 01.09.2004
(73) Proprietor: Sanden Corporation, Isesaki-shi, Gunma 372-8502 (JP)
(72) Inventor: Musou, Masanori, Takaba Hitachinaka-shi Ibaraki 312-8503 (JP); Komatsuzaki, Kiyomi, Takaba Hitachinaka-shi Ibaraki 312-8503 (JP); Ikeda, Susumu, Isesaki-shi Gunma 372-8558 (JP); Nabeta, Yukio, Isesaki-shi Gunma 372-8558 (JP)
(74) Representative: Haley, Stephen

(56) References cited:
- GB-A- 433 850
- GB-A- 434 758
- US-A- 282 849
- US-B1- 6 505 807

## Description

The present invention relates to a supporting structure for a blower motor, and, more specifically, to a supporting structure for a blower motor suitable for a double shaft type blower motor (a two-blower type motor) used in an air conditioning unit for vehicles.

As a conventional supporting structure for a blower motor, for example, as disclosed in JP-A-2002-13755, a structure is known wherein a motor is fixed via bolts to an auxiliary steel plate attached to a rear surface of a casing, and a rubber vibration isolator is interposed between the auxiliary steel plate and the motor. One impeller is attached to the shaft of the motor.

In such a supporting structure for a blower motor, however, because the side surface of the motor (in a case of a motor having a cylindrical outer shape, not the cylindrical surface but the end surface) is attached to the auxiliary steel plate with bolts, the stability in fixing is low, and the fixing may be released by the rotation of the motor and the vibration accompanying therewith. Further, there is a problem that it is difficult to apply the above-described structure to a double shaft type blower motor (a two-blower type motor) in which a fan is attached to each end of a rotational shaft of a motor. Namely, in such a double shaft type blower motor, since fans are attached on both sides of the rotational shaft of the motor, there is a restriction in space for fixing the motor with bolts from its side surface, and therefore, the bolt fastening from the side surface is substantially difficult.

It would be desirable to provide a supporting structure for a blower motor which can improve the stability in fixing the motor and which can be applied to a double shaft type blower motor (a two-blower type motor).

US-B-6505807 discloses a support structure suitable for a motor according to the preamble of claim 1. According to the present invention, there is provided a supporting structure for a blower motor having a motor and two fans each attached to each end of a rotational shaft of said motor, the structure comprising a ring-like rubber vibration isolator arranged to be disposed, in use, on a cylindrical barrel of said motor, wherein said rubber vibration isolator has a rubber projection provided thereon at a position corresponding, in use, to the position of a through-hole in the barrel, said rubber projection being arranged to be fitted into said barrel through-hole, a pair of casings for containing said barrel in use, and arranged such that said motor is held and fixed by engaging said barrel with said pair of casings via said rubber vibration isolator, a casing projection provided on at least one casing holding said rubber vibration isolator at a position corresponding to the position of said rubber projection, wherein said casing projection is arranged to be fitted into a through hole of said rubber projection.

In such a supporting structure, the stability in fixing the motor is increased, and it can be applied to a double shaft type blower motor (a two-blower type motor).

In the supporting structure according to the present invention, preferably a plurality of rubber vibration isolators are disposed between the barrel and the casings in an axial direction of the motor and engaged to the barrel and the casings.

A casing rib may extend in the circumferential direction and is provided in the casing groove, the casing rib compressing the rubber vibration isolator by fixing the pair of casings to each other.

Furthermore, in the supporting structure, it is preferred that each of the pair of casings has a casing stopper portion at one side in an axial direction of the motor for restricting an axial movement of the motor.

Further features and advantages of the present invention will be understood from the following detailed description of the preferred embodiment of the present invention with reference to the accompanying figures, of which:
Fig. 1 is an elevational view of a supporting structure for a blower motor according to an embodiment of the present invention.
Fig. 2 is an elevational view of a blower motor used in the supporting structure shown in Fig. 1.
Fig. 3 is a partial sectional view of a vibration proof structure in the supporting structure shown in Fig. 1.

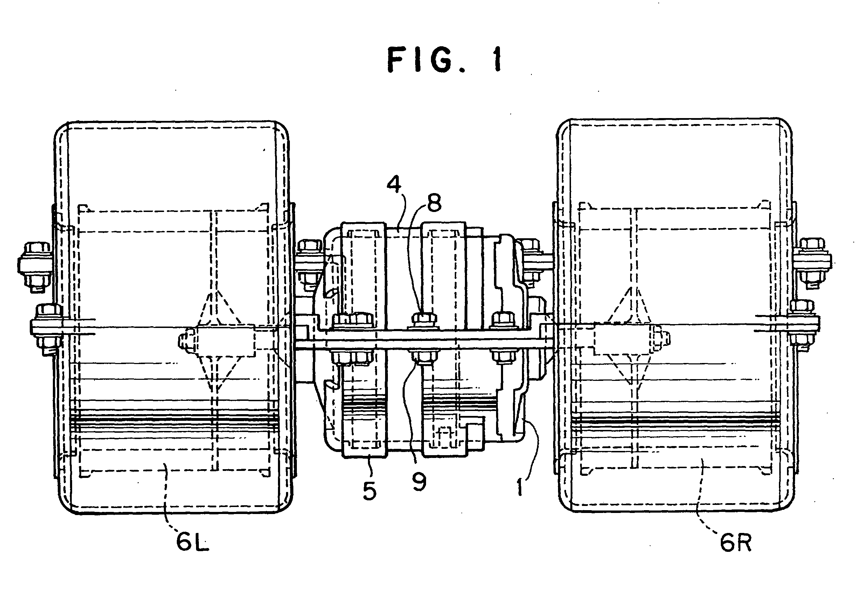

Figs. 1 to 3 show a supporting structure for a blower motor according to an embodiment of the present invention. First, the entire structure of the supporting structure will be explained using Fig. 1. In Fig. 1, the supporting structure for a blower motor comprises a motor 1, two fans of right fan 6R and left fan 6L, and a pair of casings of upper casing 4 and lower casing 5. Right fan 6R and left fan 6L are fixed to both ends of a rotational shaft of motor 1, respectively. Upper casing 4 and lower casing 5 are fixed (fastened) to each other by a plurality of casing bolts 8 and casing nuts 9.

In this embodiment, the supporting structure for a blower motor exhibits a structure like a cover skin-content structure. Upper casing 4 and lower casing 5 correspond to the cover skin of the cover skin-content structure, and motor 1 and right fan 6R and left fan 6L correspond to the content of the cover skin-content structure. Each of upper casing 4 and lower casing 5 is made in a shape integrally forming a motor casing for motor 1 and blower casings for two fans of right fan 6R and left fan 6L. By combining upper casing 4 and lower casing 5, a hollow portion is formed therein. In this hollow portion, motor 1 and two fans of right fan 6R and left fan 6L are contained and fixed. Where, a rubber vibration isolator or a plurality of rubber vibration isolators are interposed between motor 1 and upper casing 4 and lower casing 5, as described later, and by sandwiching (nipping) a cylindrical barrel of the motor 1 with the upper casing 4 and lower casing 5, the barrel is held and fixed by the upper casing 4 and lower casing 5 via the rubber vibration isolator(s).

Discharge ports are provided on the blower casing forming a part of upper casing 4 and lower casing 5, and when a voltage is applied to motor 1, air is sent out by right fan 6R and left fan 6L attached to both sides of the motor 1.

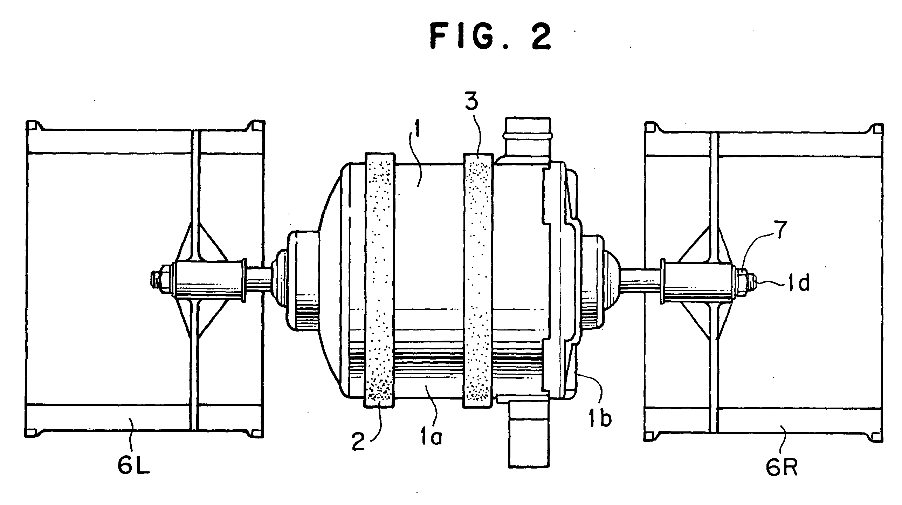

Next, referring to Fig. 2, the supporting structure for a blower motor in this embodiment will be explained.

In Fig. 2, motor 1 comprises a motor barrel 1a, a motor cover 1b and a motor shaft (a rotational shaft) 1d. Motor barrel 1a has a cylindrical shape and is formed as a shape having a bottom. A hole through which motor shaft 1d extends is provided on the bottom of motor barrel 1a at a central position. Motor cover 1b is formed as a disc-like shape, and at its central portion, a hole through which motor shaft 1d extends is provided.

In this embodiment, two ring-like rubber vibration isolators 2 and 3 are disposed on the outer surface of cylindrical motor barrel 1a of motor 1 in the axial direction of motor 1. Rubber vibration isolators 2 and 3 are interposed between motor barrel 1a and upper casing 4 and lower casing 5, and they function to suppress the vibration.

Right fan 6R and left fan 6L are fastened to motor shaft 1d at right and left positions of motor 1 by fan nuts 7, respectively.

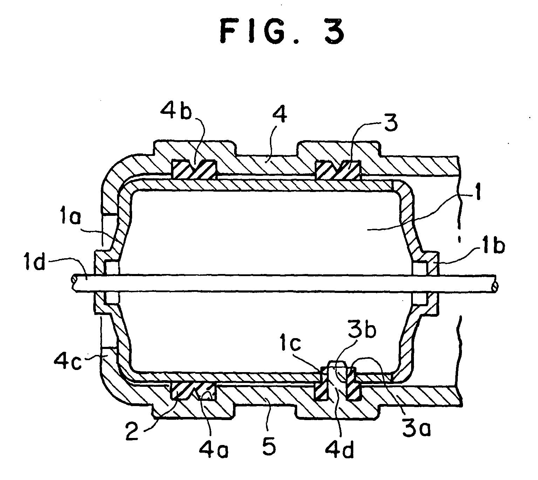

Next, referring to Fig. 3, the vibration proof structure in the supporting structure for a blower motor of this embodiment will be explained.

In Fig. 3, ring-like rubber vibration isolators 2 and 3 are disposed on motor barrel 1a in the axial direction of motor 1 at right and left positions in the figure. The inner diameters of rubber vibration isolators 2 and 3 are set smaller than the outer diameter of motor barrel 1a, and therefore, the rubber vibration isolators 2 and 3 are disposed at a high accuracy without generation of a clearance.

A plurality of ring-like casing grooves 4a extending in the circumferential direction are provided on the inner surfaces of upper casing 4 and lower casing 5 in correspondence with the attachment portions of rubber vibration isolators 2 and 3. When barrel 1a of motor 1 is disposed between upper casing 4 and lower casing 5, rubber vibration isolators 2 and 3 are disposed in the respective casing grooves 4a. A casing rib 4b projecting toward rotational shaft 1 d and extending in the circumferential direction is provided in each casing groove 4a. Motor 1 and barrel 1a are disposed between upper casing 4 and lower casing 5, and as shown in Fig. 1, a plurality of casing bolts 8 and casing nuts 9 are fastened, and whereby, casing ribs 4b are put into respective corresponding rubber vibration isolators 2 and 3 and the rubber vibration isolators 2 and 3 are compressed with a small force. Therefore, motor 1 and barrel 1a are completely floated from upper casing 4 and lower casing 5 by rubber vibration isolators 2 and 3, thereby absorbing a vibration, etc. Moreover, since motor 1 is fixed at a plurality of positions (in this embodiment, at two positions) on the cylindrical barrel 1a by upper casing 4 and lower casing 5, as compared with the case where a motor is fixed from its side surface, the stability in fixing can be increased. Therefore, the fixing of motor 1 can be prevented from being released by the rotation and vibration of the motor, etc.

In this embodiment, lower casing 5 has a casing projection 4d. Casing projection 4d has a columnar shape and it is projected radially toward rotational shaft 1d from the inner surface of lower casing 5, in this embodiment, from the inner surface of the bottom of casing groove 4a. On the other hand, barrel hole 1c (through hole) is provided on barrel 1a of motor 1. Rubber projection 3a is provided on rubber vibration isolator 3, and the rubber projection 3a is inserted and fitted into barrel hole 1c. A through hole 3b is provided in rubber projection 3a. Casing projection 4d of lower casing 5 is inserted into through hole 3b of rubber vibration isolator 3 and at the same time, inserted into barrel hole 1c of barrel 1a of motor 1, as shown in Fig. 3. This casing projection 4d restricts the movement of motor 1 in the rotational direction. On one side of each of upper casing 4 and lower casing 5 (the left side in Fig. 3), casing stopper portion 4c is provided, and both casing stopper portions 4c restrict the movement of motor 1 in the axial direction.

In the above-described embodiment, because cylindrical barrel 1a of motor 1 is fixed directly by upper casing 4 and lower casing 5 and rubber vibration isolators 2 and 3 are interposed therebetween, the stability in fixing can be increased. Further, since motor 1 is completely floated from the pair of casings by the rubber vibration isolators, a vibration, etc. can be absorbed well and the vibration proof property can be improved. Moreover, because the structure for nipping the motor between the pair of casings is employed, the motor can be easily fixed.

Further, since casing ribs 4b are provided on casings 4 and 5, when the casings 4 and 5 are fastened by casing bolts and nuts, rubber vibration isolators 2 and 3 can be easily compressed with a small fastening force, thereby improving the properties in attachment and fixing of the rubber vibration isolators 2 and 3.

Further, because casing projection 4d is inserted into barrel hole 1c provided on barrel 1a of motor 1 via through hole 3b of rubber vibration isolator 3, the movement of motor 1 in the rotational direction can be regulated. Further, the movement of motor 1 in the axial direction can be regulated by the casing stopper portions provided on one side in the axial direction of the casings.

Furthermore, by using rubber projection 3a, the motor 1 and barrel 1a can be surely positioned in a proper position not only in the axial direction but also in the circumferential direction. Therefore, at the time of positioning, it is not necessary to use an exclusive jig, and the cost for assembly can be reduced.

## Claims

1. A supporting structure for a blower motor having a motor (1) and two fans (6R, 6L) each attached to each end of a rotational shaft of said motor, the structure comprising a ring-like rubber vibration isolator (3) arranged to be disposed, in use, on a cylindrical barrel (1 b) of said motor and comprising a pair of casings (4, 5) for containing said barrel (1b) in use, and arranged such that said motor is held and fixed by engaging said barrel (1b) with said pair of casings (4,5) via said rubber vibration isolator **characterized in that** said rubber vibration isolator (3) has a rubber projection (3a) provided thereon at a position corresponding, in use, to the position of a through-hole (1c) in the barrel (1b) said rubber projection (3a) being arranged to be fitted into said barrel through-hole and **in that** a casing projection (4d) is provided on at least one casing holding said rubber vibration isolator (3) at a position corresponding to the position of said rubber projection (3a) wherein said casing projection (4d) is arranged to be fitted into a through hole (3b) of said rubber projection (3a).

2. The supporting structure for a blower motor (1) according to claim 1, wherein a plurality of rubber vibration isolators (2, 3) are disposed between said barrel (1a) and said casings (4, 5) in an axial direction of said motor and engaged with said barrel and said casings in use.

3. The supporting structure for a blower motor according to claim 1, wherein the pair of casings (4, 5) have a casing groove (4a) extending in a circumferential direction and a casing rib extending in said circumferential direction and provided in said casing groove (4a), wherein, in use, the rubber vibration isolator (2) is disposed in the casing groove and said casing rib compresses said rubber vibration isolator (2) when said pair of casings are drawn to each other.

4. The supporting structure for a blower motor according to claim 1, wherein each of said pair of casings (4, 5) has a casing stopper portion at one side in an axial direction of said motor (1), in use, for restricting axial movement of said motor.

## Patentansprüche

1. Haltestruktur für einen Gebläsemotor, der einen Motor (1) und zwei Lüfterräder (6R, 6L), von denen jedes an ein jeweiliges Ende einer Rotationswelle des Motors befestigt ist, aufweist, wobei die Struktur einen ringartigen Gummivibrationsisolator (3) aufweist, der derart angeordnet ist, dass er im Einsatz auf einer zylindrischen Trommel (1b) des Motors angeordnet ist, und ein Paar von Gehäusen (4, 5) zum Enthalten der Trommel (1b) im Einsatz aufweist, und die derart angeordnet sind, dass der Motor durch Eingriff der Trommel (1b) über den Gummivibrationsisolator mit dem Paar von Gehäusen (4, 5) gehalten und befestigt wird, **dadurch gekennzeichnet, dass** der Gummivibrationsisolator (3) einen Gummivorsprung (3a) aufweist, der auf diesem an einer Position, welche im Einsatz der Position eines Durchgangsloches (1c) in der Trommel (1b) entspricht, vorgesehen ist, wobei der Gummivorsprung (3a) derart angeordnet ist, um in das Trommedurchgangsloch eingeführt zu werden, und dass ein Gehäusevorsprung (4d) auf mindestens einem Gehäuse, das den Gummivibrationsisolator (3) hält, an einer Position, die der Position des Gummivorsprunges (3a) entspricht, vorgesehen ist, wobei der Gehäusevorsprung (4d) derart angeordnet ist, um in ein Durchgangsloch (3b) des Gummivorsprunges (3a) eingeführt zu werden.

2. Haltestruktur für einen Gebläsemotor (1) gemäß Anspruch 1, wobei eine Mehrzahl von Gummivibrationsisolatoren (2, 3) zwischen der Trommel (1a) und den Gehäusen (4, 5) in einer axialen Richtung des Motors vorgesehen sind und im Einsatz mit der Trommel und den Gehäusen im Eingriff stehen.

3. Haltestruktur für einen Gebläsemotor gemäß Anspruch 1, wobei das Paar von Gehäusen (4, 5) eine Gehäuserille (4a), die sich in einer Umfangsrichtung erstreckt, und eine Gehäuserippe, die sich in der Umfangsrichtung erstreckt und in der Gehäuserille (4a) vorgesehen ist, aufweist, wobei im Einsatz der Gummivibrationsisolator (2) in der Gehäuserille angeordnet ist und die Gehäuserippe den Gummivibrationsisolator 2 zusammendrückt, wenn das Paar von Gehäusen aneinander gezogen wird.

4. Haltestruktur für einen Gebläsemotor gemäß Anspruch 1, wobei jedes von dem Paar von Gehäusen (4, 5) einen Gehäusestopperabschnitt auf einer Seite in einer axialen Richtung des Motors (1) aufweist, um im Einsatz eine axiale Bewegung des Motors zu begrenzen.

## Revendications

1. Structure de support pour moteur de soufflerie, comportant un moteur (1) et deux ventilateurs (6R, 6L) montés chacun à une extrémité de l'arbre de rotation du moteur, la structure comprenant un isolateur de vibrations en caoutchouc (3), de forme annulaire, conçu pour être disposé, en cours d'utilisation, sur un tambour cylindrique (1b) du moteur, la structure comprenant en outre une paire de carters (4, 5) pour contenir le tambour (1b) en cours d'utilisation et disposés de façon que le moteur soit maintenu et fixé par engagement du tambour (1b) contre la paire de carters (4, 5) par l'intermédiaire de l'isolateur de vibrations en caoutchouc,
**caractérisée en ce que**
- l'isolateur de vibrations en caoutchouc (3) comporte une saillie (3a) dans une position correspondant, en cours d'utilisation, à la position d'un trou traversant (1c) percé dans le tambour (1b), la saillie en caoutchouc (3a) s'adaptant dans le trou traversant du tambour, et
- une saillie de carter (4d), sur au moins un carter, maintient l'isolateur de vibrations en caoutchouc (3) dans une position correspondant à la position de la saillie en caoutchouc (3a), la saillie de carter (4d) s'adaptant dans un trou traversant (3b) de la saillie en caoutchouc (3a).

2. Structure de support pour moteur de soufflerie (1) selon la revendication 1,
dans laquelle
une pluralité d'isolateurs de vibrations en caoutchouc (2, 3) disposés entre le tambour (1a) et les carters (4, 5) dans la direction axiale du moteur, s'engagent contre le tambour et les carters en cours d'utilisation.

3. Structure de support pour moteur de soufflerie (1) selon la revendication 1,
dans laquelle
- les deux carters (4, 5) comportent une rainure (4a) s'étendant circonférentiellement, et une nervure s'étendant dans la même direction est prévue dans la rainure de carter (4a), et
- en cours d'utilisation, l'isolateur de vibrations en caoutchouc (2) est disposé dans la rainure de carter qui comprime l'isolateur de vibrations en caoutchouc (2) lorsque les deux carters sont tirés l'un vers l'autre.

4. Structure de support pour moteur de soufflerie (1) selon la revendication 1,
dans laquelle
chacun des deux carters (4, 5) comporte sur un côté une partie de butée dans la direction axiale du moteur (1) pour limiter, en cours d'utilisation, le mouvement axial du moteur.
